# EUROPEAN PATENT SPECIFICATION

(11) **EP 3 256 707 B1**
(45) Date of publication and mention of the grant of the patent: **04.11.2020**
(21) Application number: 16749680.1
(22) Date of filing: 09.02.2016
(51) Int. Cl.: F02B 39/10, F16C 19/18, F04D 25/06, F04D 29/057

(54) **BEARINGS FOR A TURBOCHARGER**
LAGER FÜR EINEN TURBOLADER
PALIERS POUR TURBOCOMPRESSEUR

(30) Priority: 11.02.2015 US 201562114632 P
(43) Date of publication of application: 20.12.2017
(73) Proprietor: BorgWarner Inc., Auburn Hills, MI 48326 (US)
(72) Inventor: GARRARD, Tyler R., Arden, NC 28704 (US); HIPPEN, Will R., Santa Cruz, California 95060 (US); MESZAROS, Christopher, Brighton, Michigan 48114 (US)
(74) Representative: Beyer, Andreas
(86) International application number: PCT/US2016/017063
(87) International publication number: WO 2016/130497

(56) References cited:
- EP-A1- 2 500 544
- EP-A2- 1 193 370
- EP-B1- 1 317 628
- WO-A1-2014/130707
- JP-A- 2006 266 244
- JP-A- 2007 285 252
- JP-U- S5 515 381
- US-A- 5 605 045
- US-A1- 2009 025 386
- US-A1- 2013 272 854

## Description

### FIELD OF THE INVENTION:

The present invention relates generally to support of a turbocharger shaft in a housing and, in particular, the use of bearings to support the shaft.

### BACKGROUND

Some turbochargers may operate at rotational speeds of up to 350,000 rpm in certain applications. Low-friction bearings and adequate support of the shaft lead to efficient operation and long operational life of the turbocharger. It is therefore desirable to design turbocharger bearings to achieve the dual goals of high stability and low friction.

Document JP 2006 266244 A describes a bearing device for a turbocharger provided between a shaft connecting a compressor rotor to a turbine rotor and a bearing housing encircling the shaft. The bearing device comprises a compressor side bearing and a turbine side bearing arranged spaced apart in the axial direction, wherein a spring pin is fitted into each of a compressor side oil supply hole formed in the bearing housing and an oiling hole formed in the compressor side bearing for preventing the rotation of the compressor side bearing around the axis. The turbine side bearing is a full floating bearing which can rotate relative to the bearing housing and the shaft, respectively.

Document JP S55 15381 U discloses a bearing structure for a turbocharger.

Document JP 2007 285252 A describes a turbocharger including a turbine shaft, a center housing, and floating bearings, wherein the turbine shaft connects the compressor and the turbine, wherein the floating bearing is arranged on the side of the turbine, and wherein the floating bearing is arranged on the side of the compressor. Furthermore, the turbocharger includes a pin member that regulates the rotation of the floating bearing. In one embodiment, rotation about the medial axis is restricted, wherein the floating bearing is provided as a semi-floating bearing which supports the turbine shaft in a state in which it is floating relatively to the center housing and the turbine shaft.

From document US 5 605 045 A, a turbocharging system with an integral assisting electric motor is known, in which bearings embrace a shaft substantially at the ends of a bearing housing.

### SUMMARY

The present invention relates to a turbocharger according to claim 1, and preferred embodiments are defined in the dependent claims.

In a preferred embodiment, the turbocharger housing defines therein a first boss and a second boss, the first bearing disposed in the first boss and the second bearing disposed in the second boss, the one of the first and second bearings affixed to the housing being prevented from rotating relative to the respective one of the first and second bosses.

In a further preferred embodiment, the turbocharger housing defines a turbine housing portion defining the first boss therein and a compressor housing portion coupled to the turbine housing portion and defining the second boss therein.

In another preferred embodiment, the turbocharger comprises an electric machine having a rotor affixed to the turbocharger shaft between the first and second bearings, and a stator coupled to the rotor and mounted within the turbocharger housing.

In another preferred embodiment, the second end of the turbocharger is threaded, and further comprising a threaded nut configured to engage the threaded second end of the turbocharger shaft to secure the compressor wheel to the turbocharger shaft.

In another preferred embodiment, the compressor wheel is one of press fit onto the turbocharger shaft and welded to the turbocharger shaft.

In another preferred embodiment, the turbine wheel is one of press fit onto the turbocharger shaft and welded to the turbocharger shaft.

In another preferred embodiment, the first and second bearings each define an inside diameter, and wherein the inside diameter of the first bearing is greater than the inside diameter of the second bearing.

In a further preferred embodiment, the first and second bosses are each concentrically formed.

In another preferred embodiment, the turbocharger comprises an electric machine having a rotor affixed to the turbocharger shaft between the first and second bearings, wherein the turbocharger housing comprises an electric machine housing portion having the electric machine mounted therein, the turbine housing portion and the compressor housing portion each coupled to the electric machine housing portion.

### BRIEF DESCRIPTION OF THE DRAWINGS

This disclosure is illustrated by way of example and not by way of limitation in the accompanying figures. Where considered appropriate, reference labels have been repeated among the figures to indicate corresponding or analogous elements.
FIG. 1 is a cross-sectional view of a prior-art, electronically-controlled turbocharger (ECT) that includes a high-speed electric machine.
FIG. 2 is an exploded view of an embodiment of a turbocharger shaft and bearing arrangement that may be implemented in a turbocharger generally, and in particular, in an ECT such as that illustrated in FIG. 1.
FIG. 3 is an exploded view of an embodiment of a turbocharger shaft bearing arrangement configured to be secured to a housing of a turbocharger.
FIG. 4 is an assembled view of the turbocharger shaft bearing arrangement of FIG. 3 shown secured to the turbocharger housing.

### DETAILED DESCRIPTION OF THE DRAWINGS

While the concepts of the present disclosure are susceptible to various modifications and alternative forms, specific exemplary embodiments thereof have been shown by way of example in the drawings and will herein be described in detail. It should be understood, however, that there is no intent to limit the concepts of the present disclosure to the particular forms disclosed, but on the contrary, the invention is solely defined by the appended claims.

References in the specification to "one embodiment", "an embodiment", "an example embodiment", etc., indicate that the embodiment described may include a particular feature, structure, or characteristic, but every embodiment may not necessarily include the particular feature, structure, or characteristic. Moreover, such phrases may or may not necessarily refer to the same embodiment. Further, when a particular feature, structure, process, process step or characteristic is described in connection with an embodiment, it is submitted that it is within the knowledge of one skilled in the art to effect such feature, structure, process, process step or characteristic in connection with other embodiments whether or not explicitly described.

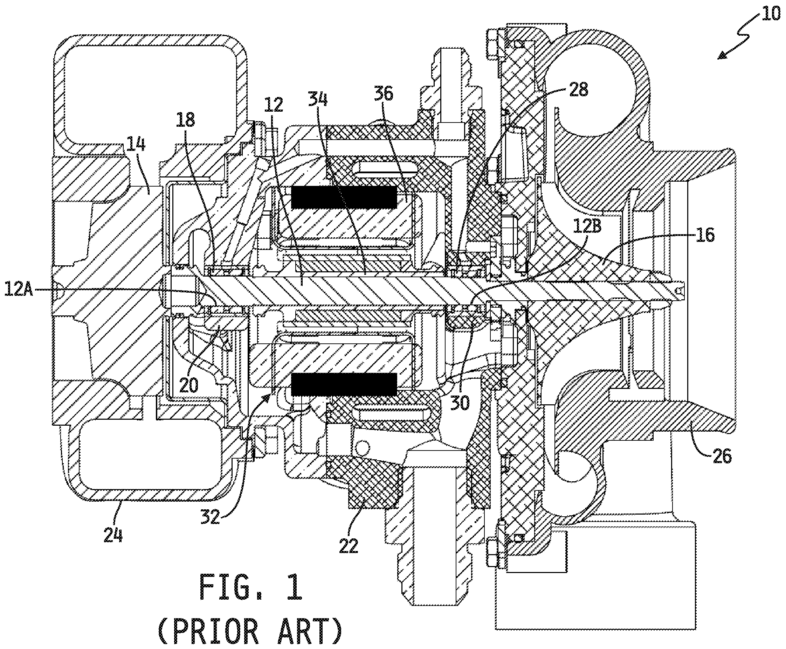

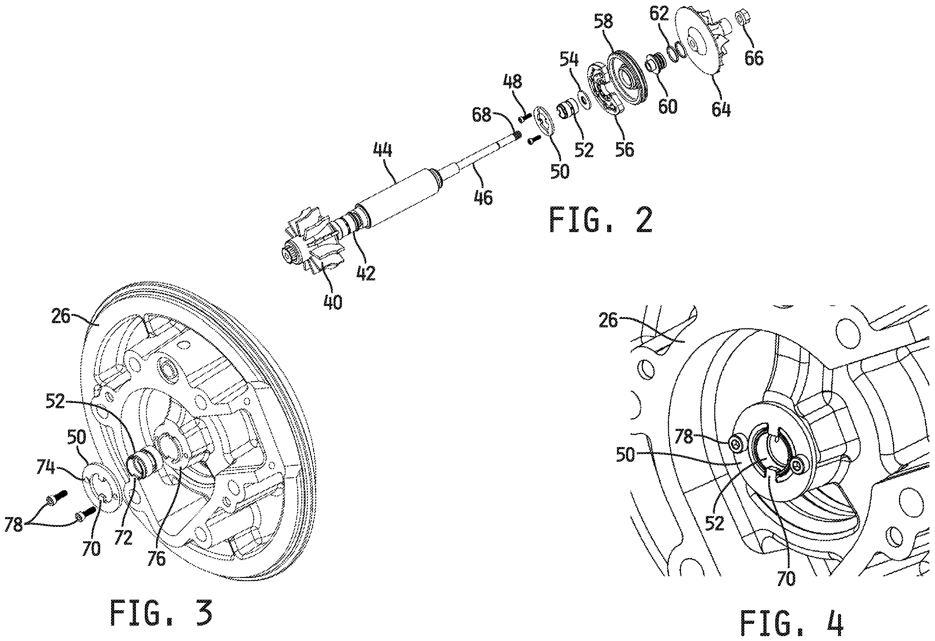

This disclosure is directed to a bearing arrangement for supporting a rotatable turbocharger shaft in, and relative to, a turbocharger housing. It will be understood that the bearing concepts illustrated and described herein are applicable to any conventional turbocharger including, for example, but not limited to, fixed geometry turbochargers, variable geometry turbochargers, so-called electronically controlled turbochargers (ECT) having one or more electric machines coupled thereto for controlling turbocharger rotational speed, and other conventional turbo-machinery. As will be described in detail with reference to FIGS. 2-4, the bearing arrangement that is the subject of this disclosure may be implemented in any such conventional turbocharger, and one example such turbocharger is the conventional ECT 10 illustrated in cross-section in FIG. 1.

Referring to FIG. 1, the illustrated ECT 10 has a turbocharger shaft 12 to which a turbine wheel 14 is affixed, e.g., by welding or other conventional turbine wheel affixing structure(s) and/or technique(s), at one end thereof. At an opposite end of the shaft 12 a compressor wheel 16 is affixed. In one embodiment, the compressor end of the turbocharger shaft 12 is threaded, and a complementarily threaded nut is advanced onto the shaft 12 to affix the compressor wheel 16 to the shaft 12. In alternative embodiments, other conventional structures and/or techniques may be used to affix the compressor wheel 16 to the shaft 12, examples of which include, but are not limited to, welding, press-fitting, or the like.

The turbocharger shaft 12 is supported by a pair of bearings 18 and 28, and each bearing 18, 28 is disposed in a boss or cradle 20, 30 respectively formed in the turbocharger housing. In the illustrated embodiment, the bearing 18 is disposed in the boss or cradle 20 in a turbine housing portion 24 of the turbocharger housing, and the bearing 28 is disposed in the boss or cradle 30 in a compressor housing portion 26 of the turbocharger housing. In some embodiments, the bosses or cradles 20, 30 are concentrically machined, although in alternate embodiments only one or neither may be concentrically machined.

In the illustrated embodiment, the outer diameter of the turbocharger shaft 12 is greater in a region 12A about which the bearing 18 is disposed than in the region 12B about which the bearing 28 is disposed. In this embodiment, the inner diameter of the bearing 18 is thus greater than that of the bearing 28, although it will be understood that in alternate embodiments the outer diameters of the shaft regions 12A, 12B, and therefore the inner diameters of the bearings 18, 28, may be the same or the outer diameter of the shaft region 12B/inner diameter of the bearing 28 may be greater than that of the outer diameter of the shaft region 12A/inner diameter of the bearing 18.

An electric machine 32, e.g. an electrically-controlled motor or motor/generator, includes a rotor 34 affixed to the turbocharger shaft 12 between the bearings 18, 28 such that the rotor 34 rotates with the shaft 12. A stator 36 is operatively coupled to the rotor 34, and the electric machine 32 is disposed within an electric machine housing portion 22 of the turbocharger housing. In the illustrated embodiment, the turbocharger housing is thus made up of three housing portions; the turbine housing portion 24, the compressor housing portion 26, and the electric machine housing portion 22. The turbine housing portion 24 and the compressor housing portion 26 are each illustratively affixed to the electric machine housing portion 22 in a conventional manner. Those skilled in the art will recognize that depending on the location of the splits between housing portions, the bosses 22 and 24 may be included in other housing portions of turbocharger 10, and that the embodiment illustrated in FIG. 1 is merely one non-limiting example thereof.

Referring now to FIG. 2, a partially exploded view is shown of a turbocharger shaft 46 including an embodiment of a bearing arrangement carried thereby. In the illustrated embodiment, a turbine wheel 40 is affixed to shaft 46 at or adjacent to one end thereof, e.g., by welding or other conventional fixation structure(s) and/or technique(s) such as a splined engagement, pressed collar, press fit, or the like. A bearing 42 is slidably received on and over the shaft 46 adjacent to the turbine wheel 40. In the illustrated embodiment, the bearing 42 is a fully-floating bearing; i.e., the bearing is not affixed to either the shaft 46 or the turbocharger housing, but rather is freely rotatable about the shaft 46 as well as within the boss or cradle 20 of the turbocharger housing. In one embodiment, oil or other lubricant is provided between bearing 42 and the boss 20 (not shown in FIG. 2 but shown in FIG. 1) as well as between the shaft 46 and the bearing 42. In any case, the bearing 42 is free to rotate relative to both the boss or cradle 20 and the shaft 46. Because the bearing 42 is freely floating, however, the bearing 42 illustratively rotates a lower rotational speed than that of the turbocharger shaft 46.

In the embodiment illustrated in FIG. 2, a rotor 44 of an electric machine is affixed to the shaft 46 by any conventional structure(s) and/or technique(s), e.g., such as a press fit, welding, threads, a nut or other structure pressing the rotor 44 into a shoulder or conical section of the shaft 46, a splined engagement, pressed collar, keyed engagement, and/or the like. A plate 50 having an opening defined therethrough is received on and over the turbocharger shaft 46 at an opposite end thereof, and another bearing 52 is, in turn, likewise received on and over the shaft 46 with the plate 50 positioned between the rotor 44 and the bearing 52. A thrust bearing assembly is then received on and over the turbocharger shaft 46 between the bearing 52 and the end of the shaft 46. In the illustrated embodiment, the thrust bearing assembly illustratively includes, in order of proximity to the bearing 52, a thrust bearing washer 54, a thrust bearing 56, a thrust bearing sealing plate 58, a compressor seal 60 and piston ring seals 62. A compressor wheel 64 is then affixed to the shaft 46 at or adjacent to the opposite end thereof, i.e., the end of the shaft 46 that is opposite to the end at which the turbine wheel 40 is affixed. In the illustrated embodiment, the opposite end of the turbocharger shaft 46 is provided with threads 68, and the compressor wheel 64 is affixed to the shaft by advancing a complementarily threaded nut 66 along the threads 68 such that the nut 66 engages the shaft 46 to secure the compressor wheel 64 thereto. In alternate embodiments, the compressor wheel 64 may be affixed to the shaft 46 via one or more other conventional fixation structure(s) and/or technique(s) such as welding, splined engagement, pressed collar, press fit, or the like.

In one embodiment, the bearing 52 illustratively defines one or more slots, channels or indentations therein, and the plate 50 illustratively defines one or more complementarily configured teeth, tangs or protrusions which engage the one or more slots, channels or indentations defined in the bearing 52 when the plate 50 and bearing 52 are received on the shaft 46 to prevent the bearing 52 from rotating relative to the plate 50. In some alternative embodiments, the plate 50 may defined the one or more slots, channels or indentations and the bearing may define the one or more teeth, tangs or protrusions. In any case, the plate 50 further illustratively defines one or more passageways or openings therethrough sized to receive conventional fixation members, e.g., screws, bolts, etc., therethrough. With the plate 50 and bearing 52 received on the shaft 46, the one or more slots, channels or indentations defined in the bearing 52 align with and engage the one or more corresponding teeth, tangs or protrusions defined in the plate 50, and the one or more openings or passageways defined through the plate 50 align with corresponding openings or passageways defined in the compressor housing portion 26 (and/or the electric machine housing portion 22) of the turbocharger housing. One or more conventional fixation members are passed through the openings or passageways defined through the plate 50 and into engagement with the aligned openings or passageways defined in the compressor housing portion 26 to secure the plate 50 and the bearing 52 to the turbocharger housing such that the bearing 52 and plate 50 are prevented from rotating relative to the turbocharger housing. In this manner, the bearing 52 is said to be "pinned" to the compressor housing portion 26 such that the bearing 52 cannot rotate relative to the turbocharger housing.

In the exploded view illustrated in FIG. 3 and in the assembled view illustrated in FIG. 4, a specific but non-limiting example of such a pinning arrangement is illustrated. In FIGS. 3 and 4, the turbocharger shaft 46 is omitted so as not to obscure the foregoing details of the plate 50, bearing 52 and compressor housing portion 26. In the illustrated embodiment, the plate 50 defines a pair of diametrically opposed teeth or tangs 70 each extending radially inwardly into a turbocharger shaft receiving opening defined centrally therethrough, and the bearing 52 defines a corresponding pair of diametrically opposed slots or channels 72 into an annular edge or rim thereof, wherein the teeth or tangs 70 and the slots or channels 72 are sized and configured such that the teeth or tangs 70 are received in the corresponding slots or channels 72 as illustrated in FIG. 3 such that the bearing 52 is prevented from rotating relative to the plate 50.

In the embodiment illustrated in FIGS. 3 and 4, the plate 50 further defines a pair of diametrically opposed openings or passageways 74 therethrough in the same plane as that of the turbocharger shaft receiving opening, and the compressor housing portion 26 likewise defines a pair of openings or passageways 76 therein which align with the openings or passageways 74. Fixation members 78, e.g., screws, are passed through the openings or passageways 74 and into engagement with the openings or passageways 76 to secure the plate 50 and bearing 52 to the compressor housing portion 26 such that the bearing 52 is prevented from rotating relative to the turbocharger housing.

In one embodiment, a thin layer of oil or other lubricant may be disposed between the bearing 52 and the boss 30 in the housing in which it is contained. In alternative embodiments, the bearing 52 may be fixed to the compressor housing portion 26 with no layer of oil or other lubricant disposed between the bearing 52 and the boss 30. In any case, the bearing 52 is pinned to the turbocharger housing such that it doesn't rotate with respect to the turbocharger housing.

In the illustrated embodiment, the bearing 52 is a partially floating bearing; that is, the bearing is affixed to the turbocharger housing but is floating, i.e., freely rotatable, relative to and about the shaft 46. In one embodiment, oil or other lubricant is provided between bearing 52 and the shaft 46. In any case, the bearing 52 is pinned to the turbocharger housing such that it is prevented from rotating relative to the boss or cradle 30 of the compressor housing portion 30 but is free to rotate relative to the turbocharger shaft 46.

In the illustrated embodiment, the bearing 42 is described as being freely floating with respect to the turbocharger shaft 46 and also with respect to the boss or cradle 20 of the turbocharger housing, and the bearing 52 is described as being pinned to the turbocharger housing but freely floating with respect to the turbocharger shaft 46. As such, the turbine-side bearing 42 may rotate relative to the boss or cradle 20 of the turbocharger housing and also relative to the turbocharger shaft 46, although because the bearing 42 is not affixed to the shaft 46 it generally will rotate at a lower rotational speed than that of the shaft 46, particularly if oil or other lubricant is disposed therebetween. The compressor-side bearing 52, on the other hand, is fixed relative to the boss 30 of the turbocharger housing because it is secured to the turbocharger housing by the plate 50, but is floating with respect to the turbocharger shaft 46. The bearing 52 may thus rotate relative to the turbocharger shaft 46 but is prevented from rotating relative to the turbocharger housing by the plate 50 which engages the bearing 52 and is affixed to the housing.

In alternative embodiments, the roles and structures of the bearings 42, 52 may be switched, i.e., the turbine side bearing 42 may be pinned to the turbocharger housing and floating with respect to the turbocharger shaft 46, e.g., as described above with respect to the bearing 52, and the compressor side bearing 52 may be freely floating, e.g., as described above with respect to the bearing 42.

While the disclosure has been illustrated and described in detail in the drawings and foregoing description, such an illustration and description is to be considered as exemplary and not restrictive in character, it being understood that only illustrative embodiments have been shown and described and that all changes and modifications consistent with the recited claims are desired to be protected.

## Claims

1. A turbocharger, comprising:
a turbocharger housing,
a turbocharger shaft (46) received within the turbocharger housing,
a turbine wheel (40) affixed to the turbocharger shaft (46) at or adjacent to a first end thereof,
a compressor wheel (64) affixed to the turbocharger shaft (46) at or adjacent to a second end thereof, the second end opposite the first end,
a first bearing (42) received on the turbocharger shaft (46) between the turbine wheel (40) and the compressor wheel (64),
a second bearing (52) received on the turbocharger shaft (46) between the first bearing (42) and the compressor wheel (64), and
a plate (50) defining an opening therethrough received on and over the turbocharger shaft (46) and secured to the turbocharger housing, the plate (50) defining one or more teeth or tangs (70) or one or more slots or channels,
wherein one of the first and second bearings (42, 52) is floating relative to the turbocharger shaft (46) and secured to the turbocharger housing, and the other of the first and second bearings (42, 52) is floating relative to the turbocharger shaft (46) and floating relative to the turbocharger housing,
and wherein the one of the first and second bearings (42, 52) defines the other of one or more teeth or tangs or one or more slots or channels (72),
and wherein the one or more teeth or tangs (70) engage the one or more slots or channels (72) to secure the one of the first and second bearings (42, 52) to the plate (50) and to the turbocharger housing and to prevent rotation of the one of the first and second bearings (42, 52) relative to the housing.

2. The turbocharger of claim 1, wherein the turbocharger housing defines therein a first boss (20) and a second boss (30), the first bearing (42) disposed in the first boss (20) and the second bearing (52) disposed in the second boss (30), the one of the first and second bearings (42, 52) affixed to the housing being prevented from rotating relative to the respective one of the first and second bosses (20, 30).

3. The turbocharger of claim 2, wherein the turbocharger housing defines a turbine housing portion (24) defining the first boss (20) therein and a compressor housing portion (26) coupled to the turbine housing portion and defining the second boss (30) therein.

4. The turbocharger of claim 1, further comprising an electric machine having a rotor (44) affixed to the turbocharger shaft (46) between the first and second bearings (42, 52), and a stator coupled to the rotor (44) and mounted within the turbocharger housing.

5. The turbocharger of any of claims 1 to 4, wherein the second end of the turbocharger shaft (46) is threaded, and further comprising a threaded nut (66) configured to engage the threaded second end of the turbocharger shaft (46) to secure the compressor wheel (64) to the turbocharger shaft (46).

6. The turbocharger of any of claims 1 to 4, wherein the compressor wheel (64) is one of press fit onto the turbocharger shaft (46) and welded to the turbocharger shaft (46).

7. The turbocharger of any of claims 1 to 4 and 6, wherein the turbine wheel (40) is one of press fit onto the turbocharger shaft (46) and welded to the turbocharger shaft (46).

8. The turbocharger of either of claims 2 to 3, wherein the first and second bosses (20, 30) are each concentrically formed.

9. The turbocharger of claim 3, further comprising an electric machine having a rotor (44) affixed to the turbocharger shaft (46) between the first and second bearings (42, 52), wherein the turbocharger housing further comprises an electric machine housing portion (22) having the electric machine mounted therein, the turbine housing portion and the compressor housing portion each coupled to the electric machine housing portion (22).

10. The turbocharger of any of claims 1 to 9, wherein the first and second bearings (42, 52) each define an inside diameter, and wherein the inside diameter of the first bearing (42) is greater than the inside diameter of the second bearing (52).

## Patentansprüche

1. Turbolader, mit:
einem Turboladergehäuse,
einer in dem Turboladergehäuse aufgenommenen Turboladerwelle (46),
einem Turbinenrad (40), das an der Turboladerwelle (46) an oder benachbart einem ersten Ende derselben befestigt ist,
einem Verdichterrad (64), das an der Turboladerwelle (46) an oder benachbart einem zweiten Ende derselben befestigt ist, wobei das zweite Ende dem ersten Ende entgegengesetzt ist,
einem auf der Turboladerwelle (46) zwischen dem Turbinenrad (40) und dem Verdichterrad (64) aufgenommenen ersten Lager (42),
einem auf der Turboladerwelle (46) zwischen dem ersten Lager (42) und dem Verdichterrad (64) aufgenommenen zweiten Lager (52), und
einer Platte (50), die eine Öffnung durch sie festlegt und auf und über der Turboladerwelle (46) aufgenommen und an dem Turboladergehäuse befestigt ist, wobei die Platte (50) einen oder mehrere Zähne oder Laschen (70) oder einen oder mehrere Schlitze oder Kanäle festlegt,
wobei eines der ersten und zweiten Lager (42, 52) bezüglich der Turboladerwelle (46) schwimmt und an dem Turboladergehäuse befestigt ist und das andere der ersten und zweiten Lager (42, 52) bezüglich der Turboladerwelle (46) schwimmt und bezüglich des Turboladergehäuses schwimmt,
und wobei das eine der ersten und zweiten Lager (42, 52) die weiteren von einem oder mehreren Zähnen oder Laschen oder einem oder mehreren Schlitzen oder Kanälen (72) festlegt,
und wobei der eine oder die mehreren Zähne oder Laschen (70) in den einen oder die mehreren Schlitze oder Kanäle (72) eingreifen, um das eine der ersten und zweiten Lager (42, 52) an der Platte (50) und an dem Turboladergehäuse zu befestigen und eine Drehung des einen der ersten und zweiten Lager (42, 52) bezüglich des Gehäuses zu verhindern.

2. Turbolader nach Anspruch 1, bei dem das Turboladergehäuse in sich eine erste Nabe (20) und eine zweite Nabe (30) definiert, wobei das erste Lager (42) in der ersten Nabe (20) angeordnet ist und das zweite Lager (52) in der zweiten Nabe (30) angeordnet ist, wobei das eine der ersten und zweiten Lager (42, 52), welches an dem Gehäuse befestigt ist, daran gehindert ist, sich bezüglich der zugehörigen einen der ersten und zweiten Naben (20, 30) zu drehen.

3. Turbolader nach Anspruch 2, bei dem das Turboladergehäuse einen Turbinengehäuseteil (24), der in sich die erste Nabe (20) definiert, und einen Verdichtergehäuseteil (26) festlegt, der mit dem Turbinengehäuseteil gekoppelt ist und in sich die zweite Nabe (30) definiert.

4. Turbolader nach Anspruch 1, ferner umfassend eine elektrische Maschine mit einem zwischen den ersten und zweiten Lagern (42, 52) an der Turboladerwelle (46) befestigten Rotor (44) und einem Stator, der mit dem Rotor (44) gekoppelt und innerhalb des Turboladergehäuses angebracht ist.

5. Turbolader nach einem der Ansprüche 1 bis 4, bei dem das zweite Ende der Turboladerwelle (46) mit einem Gewinde versehen ist, und ferner umfassend eine Gewindemutter (66), die dazu eingerichtet ist, mit dem mit einem Gewinde versehenen zweiten Ende der Turboladerwelle (46) in Eingriff zu kommen, um das Verdichterrad (64) an der Turboladerwelle (46) zu befestigen.

6. Turbolader nach einem der Ansprüche 1 bis 4, bei dem das Verdichterrad (64) mit Presssitz auf der Turboladerwelle (46) sitzt oder auf die Turboladerwelle (46) geschweißt ist.

7. Turbolader nach einem der Ansprüche 1 bis 4 und 6, bei dem das Turbinenrad (40) mit Presssitz auf der Turboladerwelle (46) sitzt oder auf die Turboladerwelle (46) geschweißt ist.

8. Turbolader nach einem der Ansprüche 2 bis 3, bei dem die ersten und zweiten Naben (20, 30) jeweils konzentrisch geformt sind.

9. Turbolader nach Anspruch 3, ferner umfassend eine elektrische Maschine mit einem zwischen den ersten und zweiten Lagern (42, 52) auf der Turboladerwelle (46) befestigten Rotor (44), wobei das Turboladergehäuse ferner einen Elektromaschinengehäuseteil (22) mit der darin angebrachten elektrischen Maschine aufweist, wobei der Turbinengehäuseteil und der Verdichtergehäuseteil jeweils mit dem Elektromaschinengehäuseteil (22) gekoppelt sind.

10. Turbolader nach einem der Ansprüche 1 bis 9, bei dem die ersten und zweiten Lager (42, 52) jeweils einen Innendurchmesser festlegen, wobei der Innendurchmesser des ersten Lagers (42) größer ist als der Innendurchmesser des zweiten Lagers (52).

## Revendications

1. Turbocompresseur comprenant,
un carter de turbocompresseur,
un arbre de turbocompresseur (46) logé dans le carter de turbocompresseur,
une roue de turbine (40) fixée à l'arbre de turbocompresseur (46) à proximité ou au niveau d'une première extrémité de celui-ci,
une roue de compresseur (64) fixé à l'arbre de turbocompresseur (46) à proximité ou au niveau d'une seconde extrémité de celui-ci, la seconde extrémité étant en regard de la première extrémité,
un premier palier (42) logé sur l'arbre de turbocompresseur (46) entre la roue de turbine (40) et la roue de compresseur (64), et
un second palier (52) logée sur l'arbre de turbocompresseur (46) entre le premier palier (42) et la roue de compresseur (64), et
une plaque (50) délimitant une ouverture à travers celle-ci sur et au-dessus de l'arbre du turbocompresseur (46) et fixée au carter de turbocompresseur, la plaque (50) délimitant une ou plusieurs dents ou queues (70) ou une ou plusieurs fentes ou canaux,
le premier ou le second palier (42, 52) étant flottant par rapport à l'arbre du turbocompresseur (46) et fixé au carter de turbocompresseur, et l'autre parmi le premier ou le second palier (42, 52) étant flottant par rapport à l'arbre du turbocompresseur (46) et flottant par rapport au carter du turbocompresseur,
et le premier ou le second palier (42, 52) délimitant l'autre parmi au moins une dent ou une queue (70) ou au moins une fente ou un canal (72),
et ladite au moins une dent ou une queue (70) s'insérant dans ladite au moins une fente ou un canal (72) pour fixer le premier ou le second palier (42, 52) à la plaque (50) et au carter de turbocompresseur et pour empêcher la rotation du premier ou du second palier (42, 52) par rapport au carter.

2. Turbocompresseur selon la revendication 1, le carter de turbocompresseur délimitant en son sein un premier bossage (20) et un second bossage (30), le premier palier (42) disposé dans le premier bossage (20) et le second palier (52) disposé dans le second bossage (30), le premier ou le second palier (42, 52) fixé au carter ne pouvant pas ainsi tourner par rapport au premier ou au second bossage respectif (20, 30).

3. Turbocompresseur selon la revendication 2, le carter du turbocompresseur délimitant une partie de carter de turbine (24) délimitant le premier bossage (20) en son sein et une partie de carter de compresseur (26) couplée à la partie de carter de turbine et délimitant le second bossage (30) en son sein.

4. Turbocompresseur selon la revendication 1, comprenant en outre un moteur électrique ayant un rotor (44) fixé à l'arbre de turbocompresseur (46) entre le premier et le second palier (42, 52), et un stator couplé au rotor (44) et monté dans le carter du turbocompresseur.

5. Turbocompresseur selon l'une quelconque des revendications 1 à 4, la seconde extrémité de l'arbre du turbocompresseur (46) étant filetée et comprenant en outre un écrou fileté (66) conçu pour se visser sur la seconde extrémité filetée de l'arbre du turbocompresseur (46) pour fixer la roue du compresseur (64) à l'arbre du turbocompresseur (46).

6. Turbocompresseur selon l'une quelconque des revendications 1 à 4, la roue du compresseur (64) étant ajustée par serrage sur l'arbre de turbocompresseur (46) ou soudée à l'arbre de turbocompresseur (46).

7. Turbocompresseur selon l'une quelconque des revendications 1 à 4 et 6, la roue de la turbine (40) étant ajustée par serra sur l'arbre du turbocompresseur (46) ou soudée à l'arbre du turbocompresseur (46).

8. Turbocompresseur selon la revendication 2 ou la revendication 3, le premier et le second bossage (20, 30) étant respectivement concentriques.

9. Turbocompresseur selon la revendication 3, comprenant en outre un moteur électrique ayant un rotor (44) fixé à l'arbre de turbocompresseur (46) entre le premier et le second palier (42, 52), le carter de turbocompresseur comprenant en outre une partie de logement de moteur électrique (22) logeant en son sein le moteur électrique, la partie de logement de moteur électrique et la partie de carter de compresseur étant couplées chacune à la partie de logement de moteur électrique (22).

10. Turbocompresseur selon l'une quelconque des revendications 1 à 9, le premier et le second palier (42, 52) délimitant chacun un diamètre intérieur, et le diamètre intérieur du premier palier (42) étant supérieur au diamètre intérieur du second palier (52).
